(19)

Europäisches
Patentamt
European
Patent Office
Office européen
des brevets

(11) **EP 2 196 940 A1**

(12) **DEMANDE DE BREVET EUROPEEN**

(43) Date de publication:
**16.06.2010 Bulletin 2010/24**

(51) Int Cl.:
***G06F 21/24*** (2006.01)

(21) Numéro de dépôt: **08305934.5**

(22) Date de dépôt: **12.12.2008**

(84) Etats contractants désignés:
**AT BE BG CH CY CZ DE DK EE ES FI FR GB GR HR HU IE IS IT LI LT LU LV MC MT NL NO PL PT RO SE SI SK TR**
Etats d'extension désignés:
**AL BA MK RS**

(71) Demandeur: **Gemalto SA**
**92190 Meudon (FR)**

(72) Inventeur: **Gonzalvo, Benoît**
**13420, Gemenos (FR)**

(54) **Procédé de sécurisation de l'utilisation parcellaire d'une donnée numérique**

(57) Procédé de sécurisation de l'utilisation parcellaire d'une donnée sensible sans stockage préalable de valeurs de sécurisation pour chacune des parcelles potentielles.

Ces valeurs sont calculées à la volée, sans s'appuyer sur les parcelles auxquelles elles sont liées afin de se prémunir contre une éventuelle altération des données avant l'association de la valeur de sécurisation.

**Fig.3**

**Description**

La présente invention concerne la sécurité des données numériques, en particulier les données pouvant être lues ou utilisées dans un appareil numérique portatif et, en particulier, concerne un procédé pour sécuriser l'utilisation parcellaire d'une donnée numérique protégée face aux attaques par faute, lors de son exploitation par un appareil numérique portatif.

Un appareil portatif désignera par la suite tout appareil numérique portatif tel qu'un ordinateur portable mais aussi tout appareil doté d' un microcontrôleur réunissant un processeur et des mémoires, tel qu'une carte à puce.

Les données électroniques prennent chaque jour un rôle plus important dans la vie de tout un chacun, notamment grâce à la vulgarisation des appareils électroniques portatifs grand public tels que les appareils photographiques numériques, les dispositif multimédia tels que les lecteurs mp3, les « GPS » qui contiennent vos destinations ou encore les téléphones portables qui embarquent de plus en plus de fonctionnalités telles que la gestion des agendas, la gestion des carnets d'adresse. Si ces données augmentent en nombre, leurs natures restent généralement limité, et il est aisé de les regrouper, par exemple en fonction de leur type : Image, Vidéo, carte de visite, texte ...

L'interconnexion grandissante des systèmes électroniques, et notamment la circulation des données, rendent celle-ci de plus en plus sujettes à des attaques.

Ces attaques sont communément divisées en trois grandes familles :

Les attaques d'intégrité,

Les attaques de confidentialité

Les attaques de déni de service.

Les attaques d'intégrité visent à altérer le contenu d'une donnée, généralement à l'insu de son destinataire légitime. Ce genre d'attaque est typiquement mené afin de modifier des informations dans une donnée. Par exemple, lors d'un échange entre un terminal bancaire et le serveur de la banque, un attaquant peut avoir un fort intérêt à modifier le montant de la transaction. Dans un tout autre domaine, lors d'une authentification avec une carte d'identité électronique, l'attaquant peut avoir un intérêt a modifier certains champs, par exemple le nom dans le cas d'une carte d'identité volée.

Ces attaques sont généralement menées en interceptant l'échange de données entre l'émetteur légitime, et le destinataire légitime. Une fois le message intercepté, il est interprété afin d'en comprendre le contenu. Il est ensuite modifié, et enfin renvoyé au destinataire légitime, qui le recevra pensant qu'il vient de l'expéditeur légitime.

Cette attaque s'appuie sur un mécanisme appelé en anglais « man in the middle » qui permet a l'attaquant d'intercepter et de réémettre un message entre deux acteurs sans que ceux-ci ne s'aperçoivent de sa présence, l'attaquant se faisant passer pour un récepteur légitime, face à l'émetteur, et comme un émetteur légitime face au récepteur.

Les attaques de confidentialité sont menées afin de recueillir de l'information. Le but de l'attaquant est de lire le maximum de données échangées entre l'émetteur légitime, et le destinataire légitime. Selon les objectifs de l'attaque, celle-ci peut se mener avec un "man in the middle", comme dans la description de l'attaque précédente, ou bien sans.

Dans le cas ou un « man in the middle » est mis en place, une fois le message intercepté, il est interprété afin d'en comprendre le contenu. Il est ensuite renvoyé au destinataire légitime, qui le recevra pensant qu'il vient de l'expéditeur légitime. Dans ce mode d'implémentation d'une attaque en confidentialité les acteurs légitimes de l'échange de données ne sont pas informés de la fuite d'information.

Dans le cas ou un "man in the middle" n'est pas réalisé entre l'émetteur et le récepteur, l'attaquant va intercepter tout ou partie des informations échangées, et va en prendre connaissance. Cette attaque va rapidement être détectée car les informations interceptées sont perdues. Ainsi le récepteur ne reçoit pas les informations qui lui sont destinées. Le plus souvent c'est l'émetteur qui va détecter l'attaque car il n'aura pas, de la part du récepteur, la réaction qu'il attendait suite à son envoi d'informations.

Ces attaques sont généralement menées afin de découvrir des informations secrètes comme par exemple des codes secrets.

Les attaques en déni de service sont un peu marginales au regard des deux précédentes, car leur but est d'interrompre le fonctionnement du système. En effet si les attaques ont toutes un objectif plus ou moins délictuel, un moyen simple de nuire aux acteurs d'un système est d'interrompre son fonctionnement. Ce genre d'attaque peut se faire par exemple en empêchant deux acteurs de communiquer, ce qui rend leur synergie nulle.

Une autre méthode peut consister en l'émission d'une grande quantité d'information à destination de tout ou partie des acteurs du système attaqué. Cette technique, aussi appelée « bombing » en anglais permet de surcharger les dispositifs électroniques partis du système, et par la même de les empêcher de dédier du temps et de la puissance de calcul pour faire les actions qui sont attendues d'eux. Une autre méthode plus complexe peut consister en la mise en place d'un « man in the middle » entre deux acteurs, et en l'altération de tout ou partie des informations échangées.

Dans ce mode d'attaque, les messages seront bien envoyés et reçus, mais leur contenu sera tout ou partiellement incompréhensible, et donc inexploitable. Ce genre d'attaque plus difficile à mettre en oeuvre a généralement pour objectif de ralentir sa détection.

Ainsi, une vérification de l'intégrité des données est importante dans la gestion normale des données, mais elle crucial en particulier face aux attaques dites attaques par faute.

Les attaques par faute sont basées sur une altération du traitement normal d'une information afin de provoquer un état « anormal ». Dans certains cas cet état « anormal » va permettre à l'attaquant d'obtenir de l'information indûment, ou bien va faire en sorte par exemple que le processus électronique ne réalise pas certaines étapes de sécurité, ou d'altérer une lecture ou une écriture en mémoire. Des fautes particulièrement élaborées peuvent permettre de modifier la valeur d'une donnée en mémoire, voire même pendant son traitement.

Cette altération du traitement normal peut se faire de deux manières, soit par une perturbation physique, soit par une perturbation logique.

Dans le cas d'une perturbation physique, c'est une variation de l'environnement du dispositif électronique, pendant sont fonctionnement, qui produit la perturbation. Par exemple un choc thermique ou une source lumineuse particulièrement intense peut provoquer une telle perturbation.

Dans le cas d'une perturbation logique, l'attaquant soumet au programme des données que celui-ci ne s'attend pas a obtenir, et espère donc provoquer une perturbation. Cela peut se faire par l'utilisation de données « trop » grandes, ou par exemple qui ne serait de la nature attendues.

Toutes ces attaques peuvent être limitées en garantissant, avant toute utilisation l'intégrité des données. Le terme de donnée désigne ici tout élément numérique pouvant entrer dans l'exécution d'un programme informatique. Le mot donnée désigne notamment les variables, les operateurs, les adresses mémoire, les éventuels registres et leurs pointeurs et tout autre élément de programmation.

Afin de se prémunir d'éventuelles attaques, les solutions existantes tendent à affecter, à chaque donnée, une donnée de contrôle. Une vérification de la relation entre une donnée et sa donnée de contrôle permet de vérifier que celle-ci n'a pas subit d'attaque d'intégrité.

Ces solutions présentent un problème majeur : une multiplication des données engendre une multiplication des données de contrôle, et vue la quantité de données croissante, ces données de contrôle prennent une place qui devient problématique dans l'univers des dispositif électroniques mobiles, par exemple tels que les téléphones portables ou les carte a puce.

La présente invention propose de rassembler des données dans des supra-données, elles protégées par l'usage de données de contrôle, et lors de l'utilisation d'un parcelle de ces supra-données, de générer une valeur de contrôle associée à cette parcelle.

Plus précisément l'invention est dans un premier temps un procédé de sécurisation de l'utilisation parcellaire d'une donnée sensible dite supra-donnée, ce procédé comprend une étape d'application d'un mode sécurisé dans lequel, dans une étape préalable une première fonction d'extraction est appliquée à ladite supra-donnée afin d'obtenir une valeur de contrôle liée la supra-donnée par l'intermédiaire d'une fonction prédéterminée,

Lors de chaque utilisation parcellaire de la supra-donnée, le procédé comprend notamment les étapes de :

- lecture d'une parcelle de la supra-donnée dite « parcelle lue »,
- extraction, au cours de laquelle une seconde fonction d'extraction est appliquée à chacune des autres parcelles composant la supra-donnée afin d'obtenir, pour chacune d'elle, une valeur de contrôle dite résiduelle,
- déduction de la valeur de contrôle, dite valeur de référence, de la parcelle lue par l'application d'une fonction mathématique prenant entre autre comme paramètres la valeur de contrôle de la supra-donnée et les valeurs de contrôle résiduelles.

Le procédé peut comprendre en outre une étape consistant à

- vérifier que ladite valeur de référence et ladite parcelle lue, sont liées par la fonction prédéterminée.

La supra-donnée peut être composée d'au moins deux parcelles distinctes. Dans un mode particulier d'implémentation, ces parcelles ne sont pas de même nature. Dans un mode particulier d'implémentation, ces parcelles ne sont pas de même taille.

La fonction prédéterminée utilisée par le procédé peut définir un morphisme de groupe.

Dans un mode d'implémentation, le mode d'exécution sécurisé peut être appliqué continuellement.

Dans un mode d'implémentation, le mode d'exécution sécurisé peut être appliqué de façon aléatoire.

Dans un mode d'implémentation, le mode d'exécution sécurisé peut être appliqué sur détection d'une condition particulière, par exemple en fonction de l'interprétation d'une partie du code.

D'autres particularités et avantages de l'invention apparaîtront clairement à la lecture de la description faite à titre d'exemple non limitatif et en regard des dessins annexés parmi lesquels :

- la figure 1 illustre une supra-donnée
- la figure 2 illustre l'extraction d'une parcelle d'une supra-donnée
- la figure 3 illustre la génération d'une donnée de contrôle d'une parcelle.

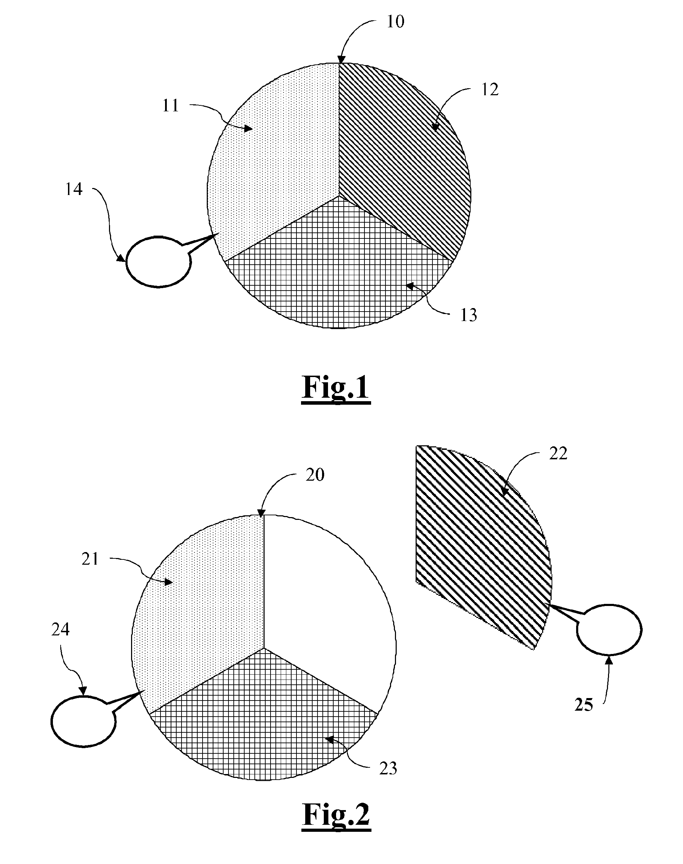

Comme illustré dans la figure 1, l'invention propose donc de sécuriser l'utilisation parcellaire d'une donnée 10 appelée supra-donnée, elle même protégée par une valeur de contrôle 14 appelée valeur de contrôle globale. Cette supra-donnée est elle même composée de parcelles 11, 12, 13. Dans un mode préféré d'implémentation, les parcelles ne sont pas de taille identique. De même, les parcelles ne sont pas obligatoirement de même nature. Ici le terme de nature s'entend au sens de type de donnée, ainsi une parcelle peut être par exemple constituée de données, une autre contenir du texte exécutable, et une troisième un mélange des deux. L'utilisation des données s'entend d'un point de vue informatique, par des opérations telles que par exemple la lecture ou la modification. L'utilisation d'une valeur de contrôle permet , à tout moment de vérifier que la donnée que l'on manipule n'a pas été altérée à de manière frauduleuse. Cette vérification peut se faire en calculant une valeur de contrôle candidate grâce à l'application d'une fonction d'extraction sur la donnée, et en comparant cette valeur de contrôle candidate avec la valeur de contrôle initialement associée à la donnée.

Afin de pouvoir faire cette vérification a tout moment dans le programme informatique qui manipule la donnée ainsi protégée, il convient que toute modification licite de cette donnée entraîne un re-calcul de la valeur de contrôle afin que ces deux entités numériques soient toujours reliées par la fonction qui les associe.

Pour ce faire, les données et les valeurs de contrôle correspondantes sont donc liées entre elles par l'intermédiaire d'une fonction de contrôle prédéterminée, dotée de propriétés mathématiques particulières comme expliquées ci-après.

Ainsi, soit V l'espace de valeurs sur des registres de longueur s. Pour des registres de longueur 32 bits, on a :

$$V= [-2147483648,\ 2147483647] = [-2^{31},\ 2^{31}-1]$$

Soit O l'ensemble V, avec les opérations logiques et arithmétiques classiques suivantes (+,-,*,/,&,|).

Soit F l'ensemble V avec l'ensemble d'opérations symbolisées de la manière suivantes ($\bigstar$, ⊠ , ⊙, ♦, □, ○).

La fonction de contrôle Chk selon l'invention peut alors être décrite de la manière suivante:

Chk : O -----→ F, de telle sorte que pour toute opération op dans l'ensemble (+,-,*,/,&,|), il existe une opération correspondante cop dans l'ensemble ($\bigstar$, ⊠ , ⊙, ♦, □, ○) telle que:

Chk ( a op b) = Chk(a) cop Chk(b)

Par exemple, la fonction ~ précédemment décrite du complément à 1 peut être écrite comme un cas particulier de la fonction Chk de la façon suivante :

$$\sim\colon\ (V,\ (+,-,*,/,\&,|))\ \dashrightarrow\ (V,\ (\bigstar\boxtimes\odot\blacklozenge\square\bigcirc))$$

$$a\ \ |\dashrightarrow\ \ \sim a$$

avec

$$\sim(a + b) = \sim a\ \bigstar\ \sim b\ =\ \sim a + \sim b + 1$$

$$\sim(a - b) = \sim a\ \boxtimes\ \sim b\ =\ \sim a - \sim b - 1$$

Mathématiquement, la fonction de contrôle Chk peut être définie comme un morphisme de groupe de l'espace O vers l'espace F, respectant l'ensemble des opérations dans F.

Ainsi, on peut voir que pour toute opération logique ou arithmétique agissant sur une ou des données dans l'espace V, qui est l'espace arithmétique classique des ordinateurs, il est possible de trouver un calcul équivalent en utilisant la fonction Chk telle que définie, utilisant un opérateur cop lié à l'opérateur op mis en oeuvre dans le premier calcul par l'intermédiaire de la fonction Chk, et agissant sur une ou des données dites de contrôle, liées aux données utilisées dans le premier calcul par l'intermédiaire de la fonction Chk.

La fonction de contrôle selon l'invention à la particularité de permettre, connaissant la valeur de contrôle d'une supra-donnée composée de N parcelles, et les valeurs de contrôle de N-1 parcelles, il est possible de générer la valeur de contrôle de la N$^{ième}$ parcelle.

Dans un mode d'implémentation de l'invention, cette fonction peut avoir deux forme, une forme appelée CHK qui permet d'associer une valeur de contrôle appelée « CHK(a) » à une donnée « a », et une forme appelée GCHK pour « Global CHK » qui permet d'associer une valeur de contrôle à la supra-donnée en fonction des valeur de contrôle des différentes parcelles qui la composent.

Un exemple de fonction peut être obtenu par la fonction identité :

$$\texttt{CHK : a |-> CHK(a) = a}$$

La valeur de contrôle associée à une donnée est alors définie comme une simple redondance de cette donnée.

Un deuxième exemple est obtenu en utilisant la fonction ~ décrite précédemment.

Un troisième exemple peut être obtenu en utilisant des fonctions mathématiques généralement utilisées dans les applications cryptographiques :

CHK : a | -> g^a avec g le générateur d'un groupe cyclique.

On voit alors que CHK (a + b) = g^(a+b) = g^a . g^b = CHK(a).CHK(b) est bien un morphisme de groupe.

Dans la figure 2, une parcelle 22 de la supra-donnée 20 est extraite, par exemple afin d'être lue. La supra-donnée est protégée par sa valeur de control 24, mais la parcelle 22 doit obtenir une valeur de control 25 afin de pouvoir être utilisée en toute sécurité. Si u ne fonction d'extraction est appliquée à la parcelle 22 afin de lui générer une valeur de contrôle 25, alors il est possible à un agent malicieux d'altérer la valeur de la parcelle 22, avant que la valeur de contrôle 25 ne soit affectée, par exemple grâce à une attaque par faute. Dans ce cas, la parcelle 22 deviendrait une parcelle corrompue 26, a laquelle serait associé une valeur de contrôle 27. Hors cette valeur de contrôle 27 et la parcelle 26 seraient effectivement liés par la fonction prédéfinie. Et il serait dès lors impossible de mettre en évidence la falsification qui a été opérée sur la parcelle 22.

La mise en oeuvre de l'invention permet d'associer une valeur de contrôle à une parcelle, sans s'appuyer sur celle-ci. Ce qui empêche une éventuelle action frauduleuse, de perturber cette affectation de valeur de contrôle.

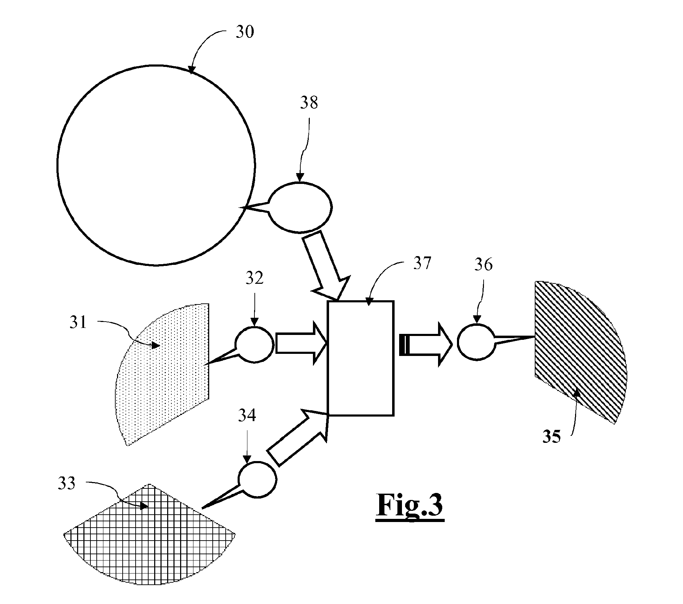

La figure 3 illustre un mode préféré de mise en oeuvre de l'invention dans lequel la parcelle 35 est extraite de la supra-sonnée 30, par exemple pour être lue. Des lors que le contrôleur de la mémoire qui contient la supra-donnée 30 reçoit cette requête, la valeur de contrôle 387 associée à la supra-donnée 30 est lue, et les autres parcelles entrant dans la composition de la supra-donnée 30 sont également lues. Dans notre exemple se sont les parcelles 31 et 33. Dans l'exemple de la figure 3, une fonction d'extraction est appliquée à chacune des parcelles 31 et 33 afin d'extraire leurs valeur de control respectives 32 et 34. Une fonction 37 est appliquée aux valeurs de contrôle 38, 32, et 34 afin d'obtenir la valeur de contrôle 36, associée à la parcelle 35.

La fonction 37 est très fortement liée à la fonction GCHK qui a permit de construire la valeur de control globale de la supra-donnée, à partir des valeurs de contrôle des différentes parcelles qui la composent. Ainsi, si la fonction GCHK utilisée est l'addition, alors la fonction 37 qui permet de retrouver la valeur de control d'une parcelle de la supra-donnée a partir des valeurs de contrôle des autres parcelles est la soustraction.

En effet, si la fonction CHK est la fonction identité, et la fonction GCHK est l'addition, alors un exemple d'implémentation peut être:

• CHK(a) = a,

• CHK( a + b + c) = GCHK.

• Alors on peut retrouver le checksum de « a » en recalculant le checksum de « b » et « c » mais sans utiliser « a » en calculant :

$$\texttt{Valeur de contrôle de "a" = GCHK - CHK(b) - CHK(c)}$$

Un autre exemple d'implémentation s'appuyant sur la fonction identité et la fonction « ou exclusif » (aussi appelé XOR)

- CHK(a) = a
- GCHK (a,b,c) = a XOR b XOR c,
- Alors Valeur de contrôle de "a" = a = GCHK(a,b,c) XOR b XOR c

Dans un exemple d'implémentation s'appuyant sur la fonction cryptographique g déjà définie, alors on peut utiliser la fonction « * ». Ainsi :

- CHK(a) = g^a
- GCHK(a,b,c)=g^(a+b+c)=g^a*g^b*g^c=CHK(a)*CHK(b)*CH K(c)
- Ainsi Valeur de contrôle de "a" = GCHK(a,b,c)/(CHK(b)*CHK(c))

Ainsi, une valeur de control a été associée à une parcelle de donnée sans avoir eut besoin d'utiliser cette parcelle.

L'invention permet donc de limiter les risques

L'invention permet donc de ne stocker que très peu de valeurs de contrôle en regroupant un maximum de donnée dans des supra-données, de plus l'invention permet de n'affecter des valeurs de contrôle qu'aux parcelles réellement utilisées.

## Revendications

1.  Procédé de sécurisation de l'utilisation parcellaire d'une donnée sensible dite supra-donnée, **caractérisé en ce que** il comprend une étape d'application d'un mode sécurisé dans lequel, dans une étape préalable une première fonction d'extraction est appliquée à ladite supra-donnée afin d'obtenir une valeur de contrôle liée à ladite supra-donnée par l'intermédiaire d'une fonction prédéterminée,
    Lors de chaque utilisation parcellaire de ladite supra-donnée, le procédé comprend notamment les étapes de :

    - lecture d'une parcelle de ladite supra-donnée dite « parcelle lue »,
    - extraction, au cours de laquelle une seconde fonction d'extraction est appliquée à chacune des autres parcelles composant ladite donnée sensible afin d'obtenir, pour chacune d'elle, une valeur de contrôle dite résiduelle,
    - déduction de la valeur de contrôle, dite valeur de référence, de la parcelle lue par l'application d'une fonction mathématique prenant entre autre comme paramètres la valeur de contrôle de la supra-donnée et les valeurs de contrôle résiduelles.

2.  Procédé selon la revendication 1, **caractérisé en ce qu'**il comprend en outre une étape consistant à

    - vérifier que ladite valeur de référence et ladite parcelle lue, sont liées par ladite fonction prédéterminée.

3.  Procédé selon la revendication 1, **caractérisé en ce que** ladite supra-donnée est composées d'au moins deux parcelles distinctes.

4.  Procédé selon la revendication 3, **caractérisé en ce que** lesdites parcelles ne sont pas de même nature.

5.  Procédé selon la revendication 3, **caractérisé en ce que** lesdites parcelles ne sont pas de même taille.

6.  Procédé selon l'une quelconque des revendications précédentes, **caractérisé en ce que** la fonction prédéterminée utilisée définit un morphisme de groupe.

7.  Procédé selon l'une quelconque des revendications précédentes, **caractérisé en ce que** le mode d'exécution sécurisé est appliqué continuellement.

8.  Procédé selon l'une quelconque des revendications 1 à 7, **caractérisé en ce que** le mode d'exécution sécurisé est appliqué de façon aléatoire.

9.  Procédé selon l'une quelconque des revendications 1 à 7, **caractérisé en ce que** le mode d'exécution sécurisé est appliqué sur détection d'une condition particulière.

10. Procédé selon la revendication 9, **caractérisé en ce que** la condition d'application du mode d'exécution sécurisé est fonction de l'interprétation d'une partie du code.

**Fig.1**

**Fig.2**

Fig.3

Europäisches
Patentamt

European
Patent Office

Office européen
des brevets

**RAPPORT DE RECHERCHE EUROPEENNE**

Numéro de la demande

EP 08 30 5934

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 1 881 404 A (GEMPLUS CARD INT [FR]) 23 janvier 2008 (2008-01-23) * alinéas [0019] - [0024] * * alinéas [0032] - [0054] * * alinéas [0064] - [0075] * ----- | 1-10 | INV. G06F21/24 |

DOMAINES TECHNIQUES RECHERCHES (IPC)

G06F

Le présent rapport a été établi pour toutes les revendications

| Lieu de la recherche | Date d'achèvement de la recherche | Examinateur |
|---|---|---|
| La Haye | 29 avril 2009 | Fruru, Tycho |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

                   

& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**

EP 08 30 5934

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

29-04-2009

| Document brevet cité au rapport de recherche | | Date de publication | Membre(s) de la famille de brevet(s) | | Date de publication |
|---|---|---|---|---|---|
| EP 1881404 | A | 23-01-2008 | EP | 2047366 A1 | 15-04-2009 |
| | | | WO | 2008009697 A1 | 24-01-2008 |

EPO FORM P0460

Pour tout renseignement concernant cette annexe : voir Journal Officiel de l'Office européen des brevets, No.12/82